# EUROPEAN PATENT APPLICATION

(11) **EP 4 528 894 A2**
(43) Date of publication of application: **26.03.2025**
(21) Application number: 24164679.3
(22) Date of filing: 19.03.2024
(51) Int. Cl.: H01M 50/204, H01M 50/244, H01M 50/251, H01M 50/262

(54) **ENERGY STORAGE SYSTEM**

(30) Priority: 30.06.2023 KR 20230084880
(71) Applicant: Samsung SDI Co., Ltd., Yongin-si, Gyeonggi-do 17084 (KR)
(72) Inventor: LEE, Do Hyung, 16678 Suwon-si (KR)
(74) Representative: Marks & Clerk LLP

(57) **Abstract**

Disclosed is an energy storage system, and a problem to be solved is to provide an energy storage system capable of preventing a battery module from falling. To this end, disclosed in an example embodiment an energy storage system includes: a rack frame; a tray provided to the rack frame; a battery module disposed on the tray and inserted into the rack frame while moving in a first direction; a guide rail disposed to face the battery module and guiding movement of the battery module; and a stopper disposed between the battery module and the guide rail and selectively restricting movement of the battery module in a second direction opposite the first direction.

## Description

### Field of the Invention

The present disclosure relates to an energy storage system.

### Description of the Related Art

In general, an energy storage system is a device capable of storing surplus electricity or electricity generated using renewable energy. A plurality of racks each accommodating a plurality of battery modules therein may be received in a container. The battery module may include a plurality of secondary batteries electrically interconnected to each other and arranged in various structures.

The battery module may be slid back and forth to be inserted into or separated from the rack. However, when the battery module is moved excessively in a separation direction during this process, components in the battery module can be damaged or a safety incident can occur when the battery module falls.

### Summary of the Invention

Embodiments of the present disclosure provide an energy storage system capable of preventing a battery module from falling. These and other aspects and features of the present disclosure will be described in or will be apparent from the following description of embodiments of the present disclosure.

To solve the above technical problem, according to one or more embodiments of the present disclosure, an energy storage system includes: a rack frame; a tray provided to the rack frame; a battery module disposed on the tray and inserted (*e.g.* insertable) into the rack frame while moving in a first direction; a guide rail disposed to face the battery module and guiding movement (*e.g.* configured to guide movement) of the battery module; and a stopper disposed between the battery module and the guide rail and selectively restricting movement (*e.g.* configured to selectively restrict movement) of the battery module in a second direction opposite the first direction.

The stopper may be composed of a plurality stoppers spaced apart from each other in the first direction.

The guide rail may include: a rail body disposed to face the battery module; and a rail hole formed through the rail body and having a first end and a second end spaced apart from the first end in the first direction.

The rail hole may have a smaller length than the battery module.

The stopper may include: a stopper body movably connected to the battery module; and a hook secured to the stopper body and inserted into or disengaged from the rail hole in a movement direction of the stopper body.

The stopper body may be elastically deformable.

The stopper body may be reciprocally movably connected to the battery module in a direction intersecting the first direction.

The stopper body may include: a stationary end connected to the battery module; and a movable end extending from the stationary end and spaced apart from the battery module, and the movable end may be rotatable about the stationary end.

The movable end may extend from the stationary end in the second direction.

The hook may include: a latch facet facing the first end; and a guide facet extending from the latch facet in the first direction and disposed at an inclination with respect to the latch facet.

The latch facet may be brought into contact with the first end as the battery module is moved in the second direction.

The energy storage system may further include an alignment member disposed between the tray and the battery module and aligning (*e.g.* configured to align) a position of the battery module.

The alignment member may include: an alignment hole formed through any one of the tray and the battery module; and an alignment protrusion protruding from the other of the tray and the battery module and inserted into or separated from the alignment hole in conjunction with movement of the battery module.

The alignment hole may include a first alignment hole, a second alignment hole and a third alignment hole sequentially arranged in the first direction, and the alignment protrusion may include a first alignment protrusion, a second alignment protrusion and a third alignment protrusion sequentially arranged in the first direction.

The second alignment hole may be disposed to alternate with the first alignment hole in an intersecting direction with respect to the first direction and the third alignment hole may be disposed to face the first alignment hole in a direction parallel to the first direction.

At least some of the above and other features of the invention are set out in the claims.

The energy storage device according to the present disclosure can limit movement of a battery module beyond a preset distance or more using a stopper upon movement of the battery module from a rack frame, thereby preventing falling of the battery module and damage to equipment and safety incidents due to falling of the battery module.

The energy storage device according to the present disclosure can adjust a degree of separation of the battery module in multiple steps using multiple stoppers spaced apart from each other in the longitudinal direction of the battery module, thereby further improving reliability of removal operation of the battery module.

The energy storage device according to the present disclosure can selectively restrict movement of the battery module through movement of a stopper body, thereby further improving convenience of the removal operation of the battery module.

The energy storage device according to the present disclosure allows smooth insertion of a battery module into the rack frame through a guide facet disposed at an inclination with respect to the latch facet.

The energy storage device according to the present disclosure can guide a battery module to be moved in a correct traveling direction and to be placed at a correct position through a guide rail and an alignment member.

### Brief Description of the Drawings

The following drawings attached to this specification illustrate embodiments of the present disclosure, and further describe aspects and features of the present disclosure together with the detailed description of the present disclosure. Thus, the present disclosure should not be construed as being limited to the drawings.
FIG. 1 is a schematic perspective view of an energy storage device according to one embodiment of the present disclosure.
FIG. 2 is a schematic plan view of the energy storage device according to the embodiment of the present disclosure.
FIG. 3 is a schematic side view of the energy storage device according to the embodiment of the present disclosure.
FIG. 4 is a schematic perspective view of a guide rail according to the embodiment of the present disclosure.
FIG. 5 is a schematic perspective view illustrating an installed state of a stopper according to the embodiment of the present disclosure.
FIG. 6 is a schematic enlarged view of the stopper according to the embodiment of the present disclosure.
FIG. 7 is a schematic side view of the stopper according to the embodiment of the present disclosure.
FIG. 8 is a schematic plan view of the stopper according to the embodiment of the present disclosure.
FIG. 9 is a schematic cross-sectional view of an alignment member according to the embodiment of the present disclosure.
FIG. 10 is a schematic plan view of alignment holes according to the embodiment of the present disclosure.
FIG. 11 is a schematic perspective view of alignment protrusions according to the embodiment of the present disclosure.
FIG. 12 to FIG. 16 are schematic views illustrating a process in which a battery module is inserted into a rack frame in the energy storage device according to the embodiment of the present disclosure.
FIG. 17 to FIG. 20 are schematic views illustrating a process in which the battery module is removed from the rack frame in the energy storage device according to the embodiment of the present disclosure.

### Detailed Description of the Invention

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of' and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being disposed (or located or positioned) on the "above (or below)" or "on (or under)" a component, it may mean that the arbitrary element is placed in contact with the upper (or lower) surface of the component and may also mean that another component may be interposed between the component and any arbitrary element disposed (or located or positioned) on (or under) the component.

In addition, it will be understood that when an element is referred to as being "coupled," "linked" or "connected" to another element, the elements may be directly "coupled," "linked" or "connected" to each other, or an intervening element may be present therebetween, through which the element may be "coupled," "linked" or "connected" to another element. In addition, when a part is referred to as being "electrically coupled" to another part, the part can be directly connected to another part or an intervening part may be present therebetween such that the part and another part are indirectly connected to each other.

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

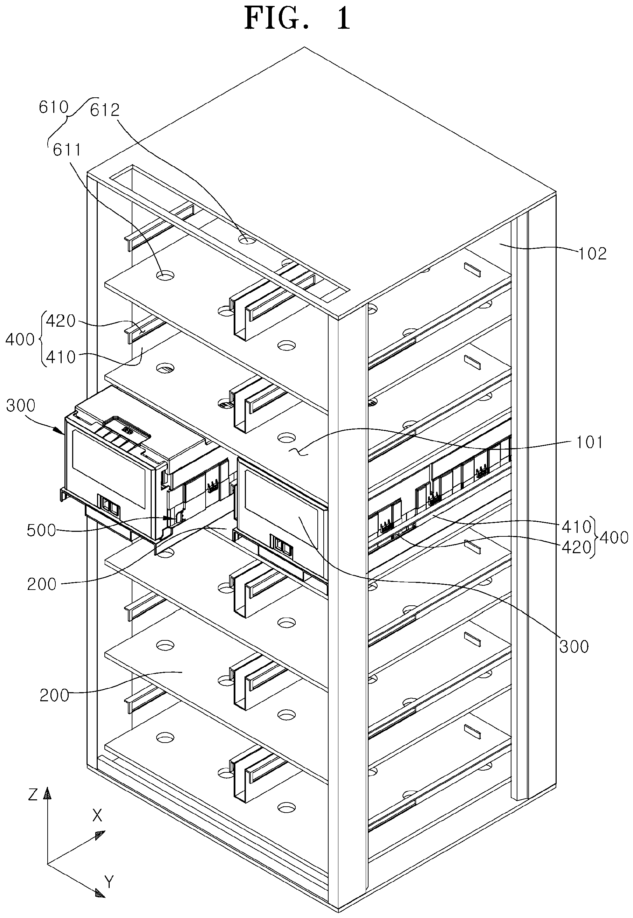

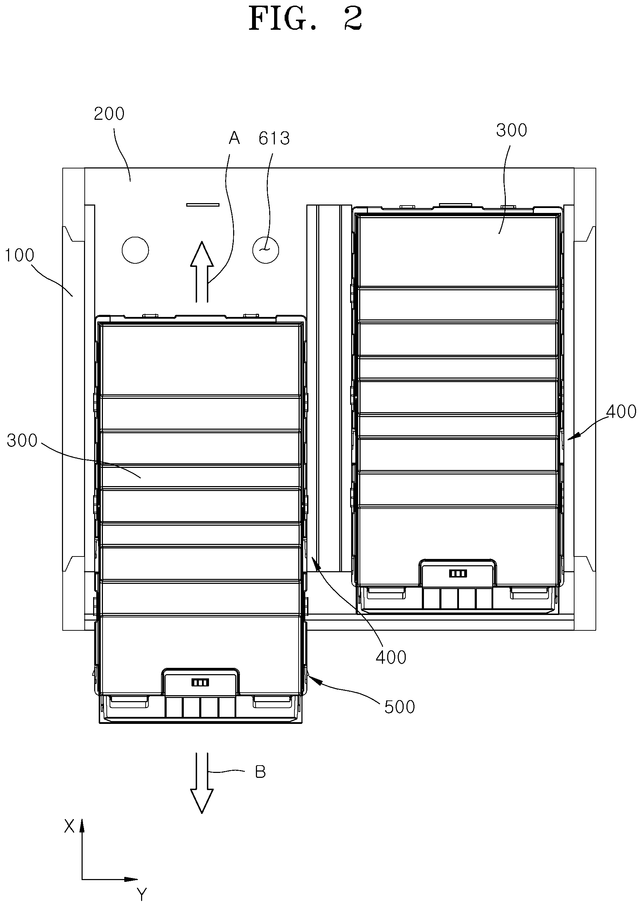

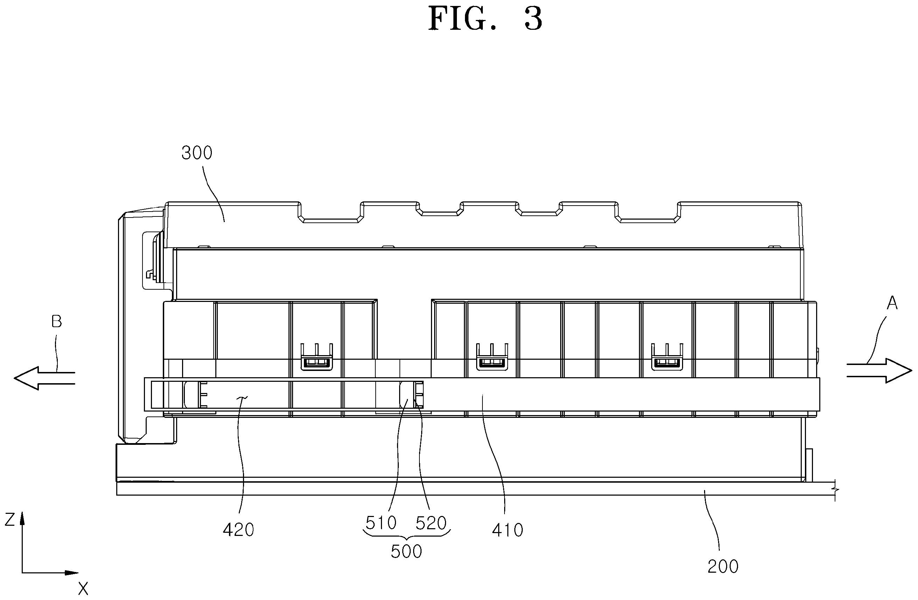

FIG. 1 is a schematic perspective view of an energy storage device according to one embodiment of the present disclosure, FIG. 2 is a schematic plan view of the energy storage device according to the embodiment of the present disclosure, and FIG. 3 is a schematic side view of the energy storage device according to the embodiment of the present disclosure

Referring to FIG. 1 to FIG. 3, an energy storage device according to one embodiment includes a rack frame 100, a tray 200, a battery module 300, a guide rail 400, and a stopper 500.

The rack frame 100 is provided therein with a space capable of accommodating battery modules 300. According to this embodiment, the rack frame 100 may have a hollow box or frame shape. The rack frame 100 may be disposed in a building, a container, a cabinet, or the like. The rack frame 100 may be formed of a material with high stiffness, such as steel and the like, to prevent breakage due to a load applied from the battery modules 300. Although FIG. 1 shows the rack frame 100 having a parallelepiped shape, it should be understood that the rack frame 100 may be modified into various shapes including a polyhedral shape, a cylindrical shape, and the like.

The rack frame 100 may include a first surface 101 and a second surface 102 placed at an opposite side of the first surface 101. The first surface 101 and the second surface 102 may be parallel to each other to face each other in a direction parallel to the X-axis with reference to FIG. 1. The first surface 101 may be an open surface through which an interior space of the rack frame 100 connects with an exterior space thereof.

Herein, a first direction A may refer to a direction from the first surface 101 of the rack frame 100 to the second surface 102 thereof and parallel to the X-axis with reference to FIG. 1. Further, a second direction B may refer to an opposite direction to the first direction A, that is, a direction from the second surface 102 of the rack frame 100 to the first surface 101 thereof and parallel to the X-axis.

The tray 200 is disposed inside the rack frame 100 and divides an interior space of the rack frame 100. According to this embodiment, the tray 200 may have a substantially flat plate shape. The tray 200 may be integrally secured to the rack frame 100 by welding or the like, or may be detachably assembled to the rack frame 100 by bolting, interference fitting, or the like. The trays 200 may be disposed horizontally with respect to a bottom surface of the rack frame 100. The tray 200 may be provided in plural. A plurality of trays 200 may be stacked inside the rack frame 100 in a vertical direction, that is, in the Z-axis direction with reference to FIG. 1. The number of trays 200, the distance between adjacent trays 200, and the height of each battery module 300, which will be described below, may be modified in various ways. The trays 200 may be formed of a material with high stiffness, such as steel or the like, to prevent breakage due to a load from the battery modules 300.

The battery module 300 stores power through charge/discharge operation, or supplies the stored power to an external electronic device (not shown). The battery module 300 may include a substantially box-shaped module case, a plurality of battery cells disposed within the module case, and a cooling plate through which coolant flows to cool the battery cells. The battery cells may be pouch-type secondary cells, prismatic secondary cells, or cylindrical secondary cells.

The battery module 300 may be disposed to have a longitudinal direction parallel to the first direction A. The battery module 300 placed outside the rack frame 100 to face the first surface 101 may be inserted into the rack frame 100 through the first surface 101 while being moved in the first direction A. Conversely, the battery module 300 inserted into the rack frame 100 may be removed from the rack frame 100 through the first surface 101 while being moved in the second direction B.

The battery module 300 may be disposed on the tray 200 inside the rack frame 100. More specifically, the battery module 300 may have a lower surface contacting an upper surface of the tray 200.

The battery module 300 may be provided in plural. A plurality of battery modules 300 may be disposed in plural rows inside the rack frame 100 in directions perpendicular to the first direction A, that is, in the Y-axis and Z-axis directions with reference to FIG. 1. The plurality of battery modules 300 disposed in the Z-axis direction may be arranged on the corresponding trays 200, respectively.

The guide rail 400 is disposed to face the battery module 300 and guides movement of the battery module 300. That is, the guide rail 400 may serve to guide the battery module 300 to maintain a movement direction in the first direction A or the second direction B inside the rack frame 100 while the battery module is inserted into or separated from the rack frame 100.

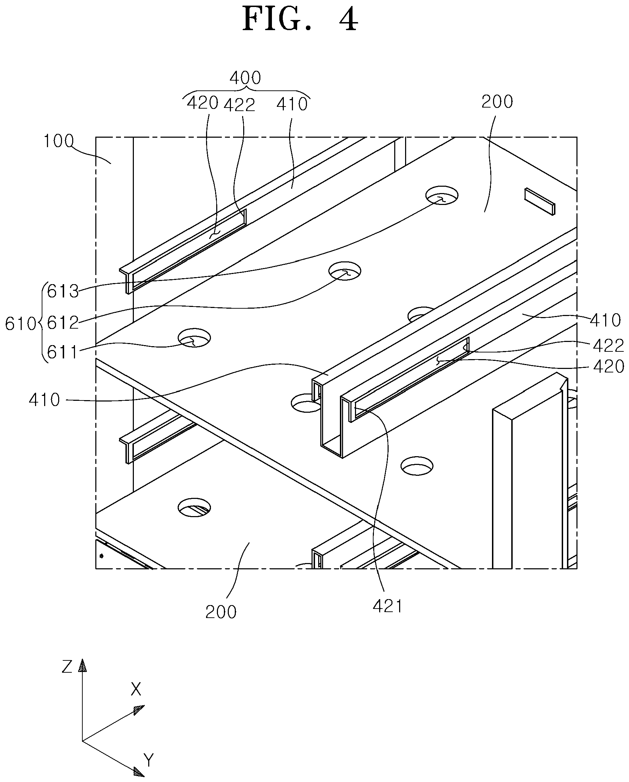

FIG. 4 is a schematic perspective view of a guide rail according to the embodiment of the present disclosure.

Referring to FIG 1 to FIG. 4, the guide rail 400 according to this embodiment may include a rail body 410 and a rail hole 420.

The rail body 410 is disposed to face the battery module 300 inside the rack frame 100. According to this embodiment, the rail body 410 may have a substantially plate shape and may be disposed to face a side surface of the battery module 300. The rail body 410 may be disposed to have a longitudinal direction parallel to the first direction A. The rail body 410 may be secured to the tray 200 and may also be secured to the rack frame 100. The rail body 410 may directly contact the side surface of the battery module 300 or may be spaced apart therefrom by a predetermined distance. The rail body 410 may be provided in plural. Among a plurality of rail bodies 410, any pair of rail bodies 410 may be disposed to face opposite side surfaces of the battery module 300, respectively.

The rail hole 420 may be formed through the rail body 410. More specifically, the rail hole 420 may penetrate the rail body 410 in a direction perpendicular to the side surface of the battery module 300 (a direction parallel to the Y-axis with reference to FIG. 1). The rail hole 420 may have a shorter length than the battery module 300 and the rail body 410.

The rail hole 420 may include a first end 421 and a second end 422 spaced apart from the first end 421 in the first direction A. The first end 421 and the second end 422 may be boundary surfaces between the rail hole 420 and the rail body 410, which are disposed at opposite ends of the rail hole 420, respectively. The first end 421 may be disposed to face the first surface 101 of the rack frame 100 and the second end 422 may be disposed to face the second surface 102 of the rack frame 100.

The stopper 500 is disposed between the battery module 300 and the guide rail 400, and selectively restricts movement of the battery module 300 in the second direction B. That is, the stopper 500 may serve to restrict or allow movement of the battery module 300 in the second direction B while the battery module 300 is removed from the rack frame 100. Accordingly, the stopper 500 may prevent the battery module 300 from falling by preventing the battery module 300 from moving abruptly in the second direction B while the battery module 300 is removed from the rack frame 100.

The stopper 500 may be provided in plural. A plurality of stoppers 500 may be spaced apart from each other in the first direction (A). Accordingly, the plurality of stoppers 500 may restrict movement of the battery module 300 in the second direction (B) in multiple steps, thereby further improving reliability in removal operation of the battery module 300. The plurality of stoppers 500 may be symmetrically disposed at both sides of the battery module 300, which are perpendicular to the Y-axis direction.

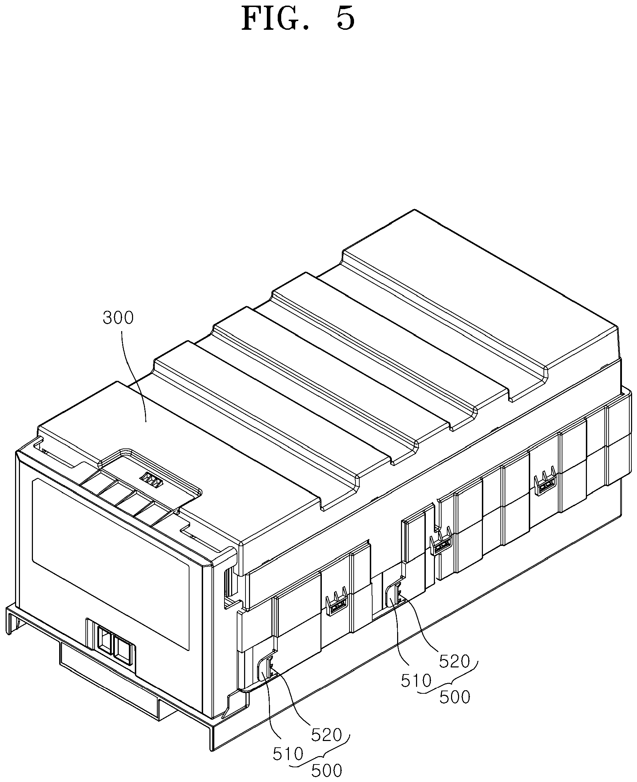

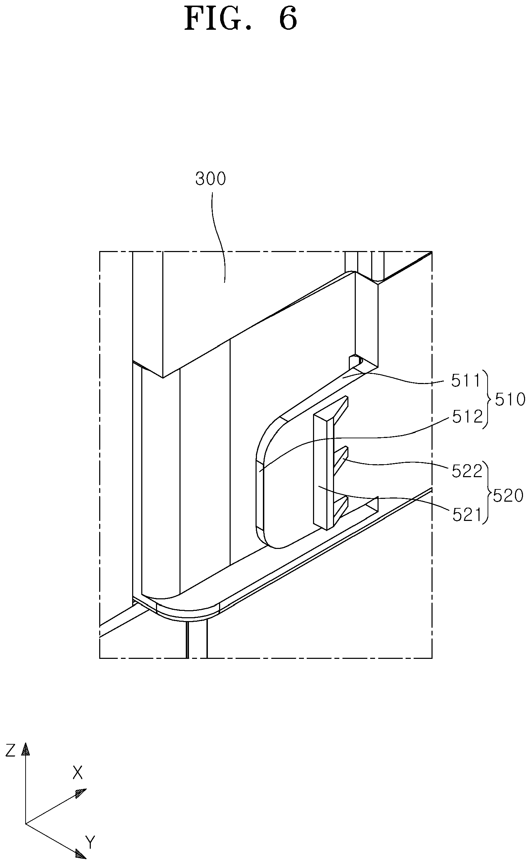

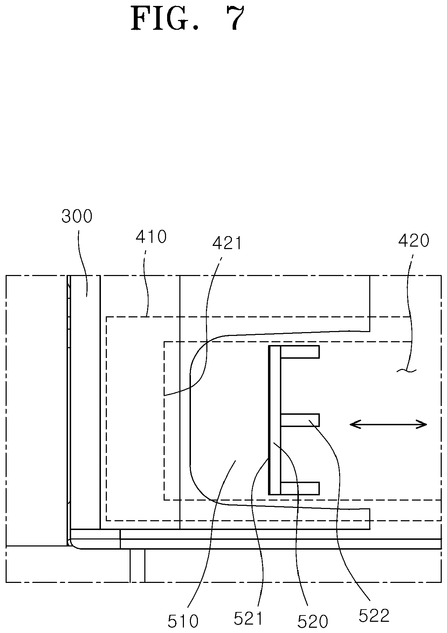

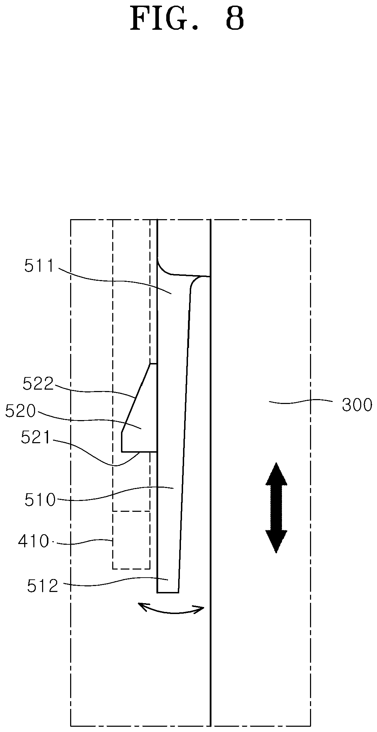

FIG. 5 is a schematic perspective view illustrating an installed state of the stopper according to the embodiment of the present disclosure, FIG. 6 is a schematic enlarged view of the stopper according to the embodiment of the present disclosure, FIG. 7 is a schematic side view of the stopper according to the embodiment of the present disclosure, and FIG. 8 is a schematic plan view of the stopper according to the embodiment of the present disclosure.

Referring to FIG. 5 to FIG. 8, the stopper 500 according to this embodiment may include a stopper body 510 and a hook 520.

The stopper body 510 is movably connected to the battery module 300 and supports the hook 520 described below. The stopper body 510 may be moved by external force and may serve to adjust a relative position of the hook 520 relative to the guide rail 400.

According to this embodiment, the stopper body 510 may have a substantially flat plate shape. The stopper body 510 may be disposed such that inner and outer surfaces of the stopper body 510 face a side surface of the battery module 300 and the rail body 410 to be parallel thereto, respectively, at an initial position where no external force is applied. The stopper body 510 may be reciprocally movably connected to the battery module 300 in a direction intersecting the first direction A. More specifically, as shown in FIG. 6, the stopper body 510 may include a stationary end 511 secured to the side surface of the battery module 300 and a movable end 512 extending from the stationary end 511. The movable end 512 may extend from the stationary end 511 in the second direction B and may be spaced apart from the side surface of the battery module 300. The movable end 512 may be rotated about the stationary end 511 in the clockwise or counterclockwise direction. For example, when compressive force is applied to the outer surface of the stopper body 510 facing the rail body 410 toward the side surface of the battery module 300, the movable end 512 may be rotated toward the side surface of the battery module 300 about the stationary end 511.

The stopper body 510 may be elastically deformable. Accordingly, the stopper body 510 may be returned to an initial position thereof by elastic resilience thereof upon removal of external force applied thereto. For example, the stopper body 510 may be formed of an elastically deformable plastic material with sufficient stiffness.

The hook 520 is secured to the stopper body 510 and is inserted into or disengaged from the rail hole 420 depending on a movement direction of the stopper body 510. The hook 520 may be kept inserted into the rail hole 420 while the stopper body 510 is at an initial position thereof to face the rail body 410. The hook 520 may be moved together with the battery module 300 in the first direction A or the second direction B in a state of being inserted into the rail hole 420. The hook 520 may have a smaller height than the rail hole 420. Accordingly, the hook 520 may be smoothly moved in the rail hole 420.

As the hook 520 is moved beyond a preset distance or more in the second direction B inside the rail hole 420, the hook 520 may restrict movement of the battery module 300 in the second direction B through interference with the rail body 410. In this state, the hook 520 may allow only the movement of the battery module 300 in the second direction B only when the hook 520 is disengaged from the rail hole 420 by movement of the stopper body 510.

On the other hand, the hook 520 may always allow movement of the battery module 300 in the first direction A regardless of insertion of the hook 520 into the rail hole 420. That is, the hook 520 may selectively restrict movement of the battery module 300 only when the battery module 300 is removed from the rack frame 100.

According to this embodiment, the hook 520 may include a latch facet 521 and guide facets 522.

The latch facet 521 may be disposed at one side of the hook 520 to face the first end 421 of the rail hole 420 when the hook 520 is inserted into the rail hole 420. The latch facet 521 may have a planar shape perpendicular to the first direction A and the second direction B. The latch facet 521 may contact the first end 421 of the rail hole 420 and may restrict movement of the battery module 300 in the second direction B when the battery module 300 is moved a preset distance or more in the second direction B, with the hook 520 inserted into the rail hole 420.

The guide facets 522 may be disposed at the other side of the hook 520 and may extend from the latch facet 521 in the first direction A. The guide facet 522 may be disposed at an inclination with respect to the latch facet 521. For example, the guide facets 522 may have a beveled surface that has a gradually decreasing distance from the stopper body 510 toward an end of the guide facet 522, that is, in the first direction A. Accordingly, as the battery module 300 is inserted into the rack frame 100, the guide facets 522 may brought into contact with the rack body 410 and may rotate the movable end 512 of the stopper body 510 towards the side surface of the battery module 300.

According to this embodiment, the energy storage device may further comprise an alignment member 600.

The alignment member 600 is disposed between the tray 200 and the battery module 300 and aligns the position of the battery module 300. That is, the alignment member 600 may serve to place the battery module 300 at a correct position on the tray 200 when the battery module 300 is inserted into the rack frame 100. In addition, the alignment member 600 may serve to restrict abrupt movement of the battery module 300 in the first direction A or the second direction B while the battery module 300 is inserted into or separated from the rack frame 100. Accordingly, the alignment member 600 may prevent an excessive load from being applied to the stopper 500.

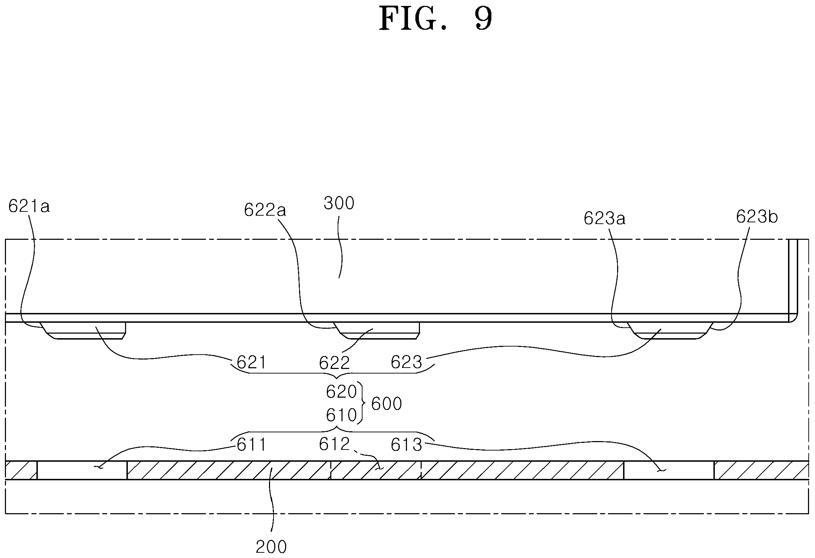

FIG. 9 is a schematic cross-sectional view of the alignment member according to the embodiment of the present disclosure.

Referring to FIG. 9, the alignment member 600 according to this embodiment may include alignment holes 610 and alignment protrusions 620.

The alignment holes 610 are formed through any one of the tray 200 and the battery module 300. Herein, the alignment holes 610 formed through the tray 200 will be described by way of example. However, the alignment holes 610 are not limited thereto and may also be formed through the battery module 300.

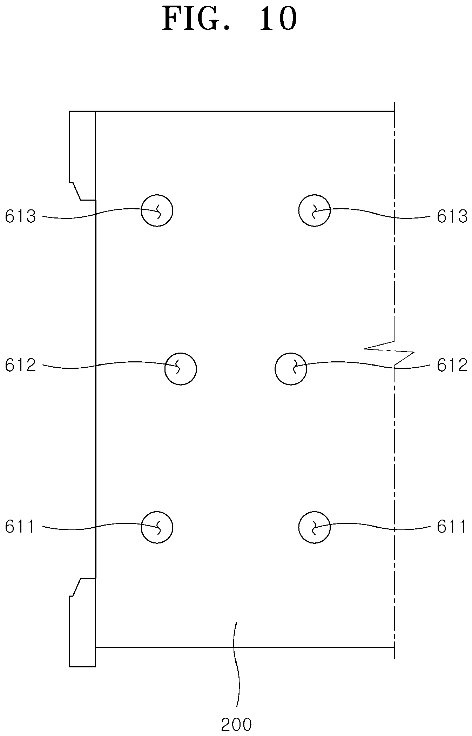

FIG. 10 is a schematic plan view of the alignment holes according to the embodiment of the present disclosure.

Referring to FIG. 9 and FIG. 10, the alignment holes 610 according to this embodiment may include a first alignment hole 611, a second alignment hole 612, and a third alignment hole 613.

Each of the first alignment hole 611, the second alignment hole 612, and the third alignment hole 613 may have a hole shape that perpendicularly penetrates the tray 200 in the vertical direction, that is, in a direction parallel to the Z-axis. Although FIG. 10 shows the first alignment hole 611, the second alignment hole 612, and the third alignment hole 613 each having a circular shape, the shape of the first to third alignment holes may be modified into various shapes, such as a polygonal shape, an elliptical shape, and the like.

The first alignment hole 611, the second alignment hole 612, and the third alignment hole 613 may be sequentially arranged in the first direction A. That is, the first alignment hole 611, the second alignment hole 612, and the third alignment hole 613 may be sequentially arranged from one end of the tray 200 facing the first surface 101 toward the other end of the tray 200 facing the second surface 102.

The first alignment hole 611 and the third alignment hole 613 may face each other in a direction parallel to the first direction A. That is, central axes of the first alignment hole 611 and the third alignment hole 613 may intersect at different points on a straight line parallel to the first direction A.

The first alignment holes 611 and the second alignment holes 612 may be disposed to alternate with each other in an intersecting direction with respect to the first direction A. That is, the first alignment holes 611 and the second alignment holes 612 may have the central axes parallel to the first direction A and may be disposed to intersect different straight lines spaced apart in the Y-axis direction, respectively.

Each of the first alignment hole 611, the second alignment hole 612, and the third alignment hole 613 may be provided in plural. For example, as shown in FIG. 10, each of the first alignment hole 611, the second alignment hole 612, and the third alignment hole 613 may be provided as a pair of alignment holes. The pair of first alignment holes 611, the pair of second alignment holes 612, and the pair of third alignment holes 613 may be arranged in two rows in an intersecting direction with respect to the first direction A.

The alignment protrusions 620 protrude from the other of the tray 200 and the battery module 300. Herein, the alignment protrusions 620 protruding from the battery module 300 will be described by way of example. However, the alignment protrusions 620 are not limited thereto and may also protrude from the tray 200. The alignment protrusions 620 may be inserted into or separated from the alignment holes 610 in conjunction with movement of the battery module 300.

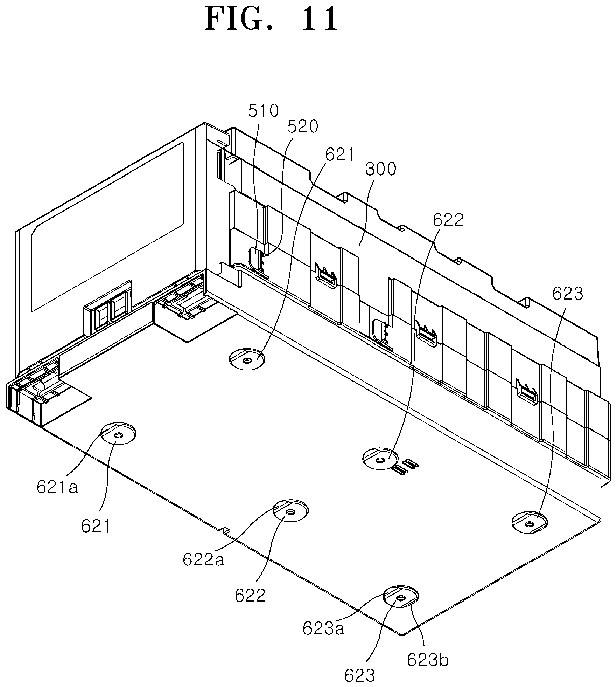

FIG. 11 is a schematic perspective view of the alignment protrusions according to the embodiment of the present disclosure.

Referring to FIG. 9 and FIG. 11, the alignment protrusions 620 according to this embodiment may include a first alignment protrusion 621, a second alignment protrusion 622, and a third alignment protrusion 623.

The first alignment protrusions 621, the second alignment protrusions 622, and the third alignment protrusions 623 may protrude downwardly from a lower surface of the battery module 300 in the vertical direction. Although FIG. 10 shows the first alignment protrusion 621, the second alignment protrusion 622, and the third alignment protrusion 623 each having a circular cross-sectional shape, it should be understood that the cross-sectional shapes thereof may be modified into various shapes so long as the first to third alignment protrusions can be inserted into the alignment holes 610.

The first alignment protrusions 621, the second alignment protrusions 622, and the third alignment protrusions 623 may be sequentially arranged in the first direction A. That is, the first alignment protrusions 621, the second alignment protrusions 622, and the third alignment protrusions 623 may be sequentially arranged from a front side of the battery module 300 disposed facing the first surface 101 toward a rear side of the battery module 300 when the battery module 300 is fully inserted into the rack frame 100.

The first alignment protrusion 621 and the third alignment protrusion 623 may be disposed to face each other in a direction parallel to the first direction A. That is, central axes of the first alignment protrusion 621 and the third alignment protrusion 623 may intersect at different points on any one straight line parallel to the first direction A.

The first alignment protrusions 621 and the second alignment protrusions 622 may be disposed to alternate with each other in an intersecting direction with respect to the first direction A. That is, the first alignment protrusions 621 and the second alignment protrusions 622 may have the center axes parallel to the first direction A and may be disposed to intersect different straight lines spaced apart from each other in the Y-axis direction, respectively.

Each of the first alignment protrusion 621, the second alignment protrusion 622, and the third alignment protrusion 623 may be provided in plural. For example, as shown in FIG. 11, each of the first alignment protrusion 621, the second alignment protrusion 622, and the third alignment protrusion 623 may be provided as a pair of alignment protrusions. The pair of first alignment protrusions 621, the pair of second alignment protrusions 622, and the pair of third alignment protrusions 623 may be arranged in two rows in the intersecting direction with respect to the first direction A. The number and spacing of the first alignment protrusions 621, the second alignment protrusions 622, and the third alignment protrusions 623 may be correspond to the number and spacing of the first alignment holes 611, the second alignment holes 612, and the third alignment holes 613.

Each of the first alignment protrusions 621, the second alignment protrusions 622, and the third alignment protrusions 623 may have a beveled edge. Accordingly, the first alignment protrusions 621, the second alignment protrusions 622, and the third alignment protrusions 623 may be smoothly removed from the first alignment holes 611, the second alignment holes 612, and the third alignment holes 613, respectively, during movement of the battery module 300.

More specifically, the first alignment protrusion 621 may be formed at one side thereof with a first beveled surface 621a, the second alignment protrusion 622 may be formed at one side thereof with a second beveled surface 622a, and the third alignment protrusion 623 may be formed at opposite sides thereof with a third beveled surface 623a and a fourth beveled surface 623b, respectively.

The first beveled surface 621a, the second beveled surface 622a, the third beveled surface 623a, and fourth beveled surface 623b may be formed away from the central axes of the first alignment protrusion 621, the second alignment protrusion 622, and the third alignment protrusion 623, respectively, with decreasing distance to the lower surface of the battery module 300. The first beveled surface 621a, the second beveled surface 622a, the third beveled surface 623a, and the fourth beveled surface 623b may contact the lower surface of the battery module 300.

The first beveled surface 621a, the second beveled surface 622a, and the third beveled surface 623a may be disposed to face the second direction B, and the fourth beveled surface 623b may be disposed to face the first direction A. On the other hand, when the alignment protrusions 620 protrude from the tray 200, the first beveled surface 621a, the second beveled surface 622a, and the third beveled surface 623a may be disposed to face the first direction A and the fourth beveled surface 623b may be disposed to face the second direction B.

Next, operation of the energy storage device according to the embodiment of the present disclosure will be described.

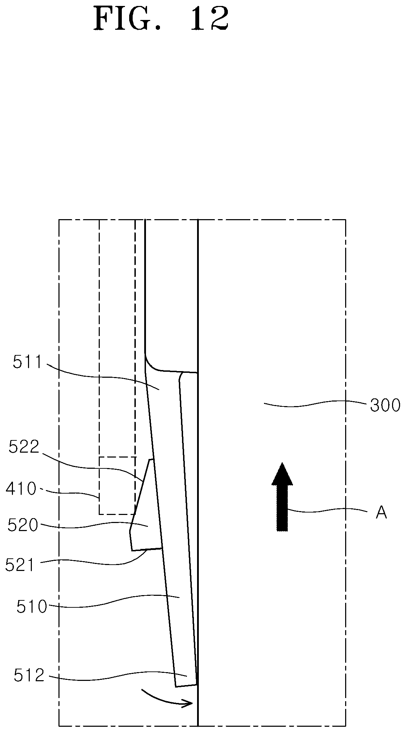

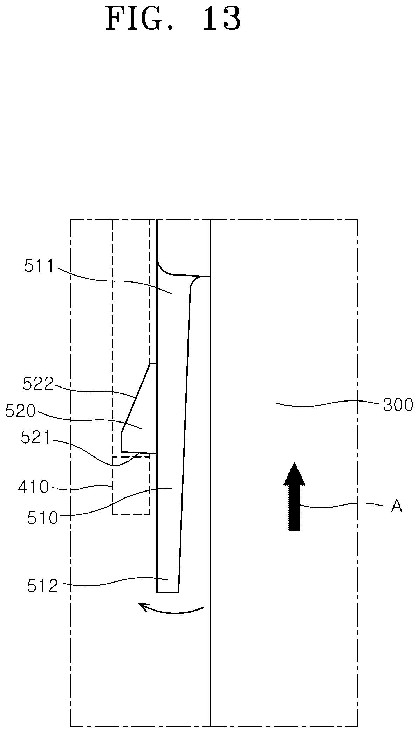

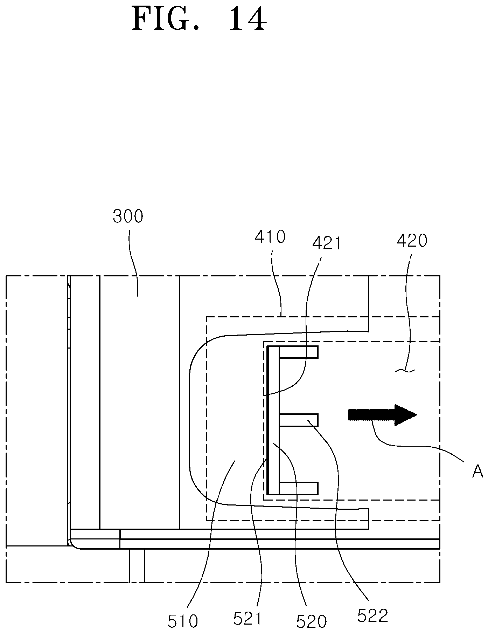

FIG. 12 to FIG. 16 are schematic views illustrating a process in which a battery module is inserted into the rack frame in the energy storage device according to the embodiment of the present disclosure.

Referring to FIG. 12 to FIG. 14, the battery module 300 disposed outside the rack frame 100 is inserted into the rack frame 100 through the first surface 101 while being moved in the first direction A.

When the rack frame 100 is moved a preset distance or more in the first direction A, the guide facet 522 contacts the rail body 410.

Since the guide facet 522 is disposed at an inclination with respect to the first direction A, the guide facet 522 converts some of reaction force due to contact between the guide facet 522 and the rail body 410 into compressive force toward the side surface of the battery module 300.

By the compressive force converted by the guide facet 522, the movable end 512 of the stopper body 510 is rotated toward the side surface of the battery module 300 and the hook 520 is moved in the first direction A while maintaining contact with the retractor body 410.

Thereafter, as the hook 520 is disposed to face the rail hole 420, the stopper body 510 is restored to an initial position thereof by elastic resilience thereof and the hook 520 is inserted into the rail hole 420.

The hook 520 is moved together with the battery module 300 in the first direction A in a state of being inserted into the rail hole 420.

The above operation may be repeated sequentially with respect to the plurality of stoppers 500 spaced apart from each other in the longitudinal direction of the battery module 300 until the battery module 300 is fully inserted into the rack frame 100.

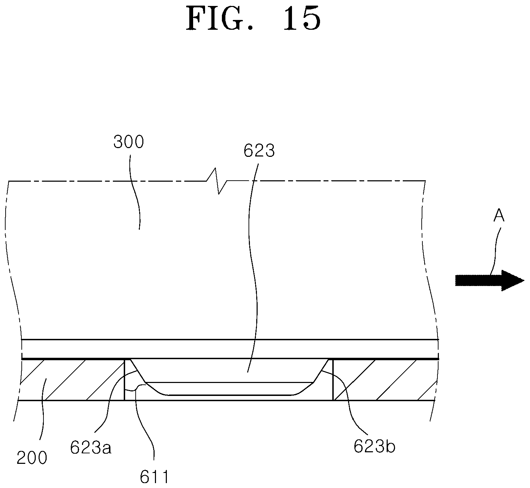

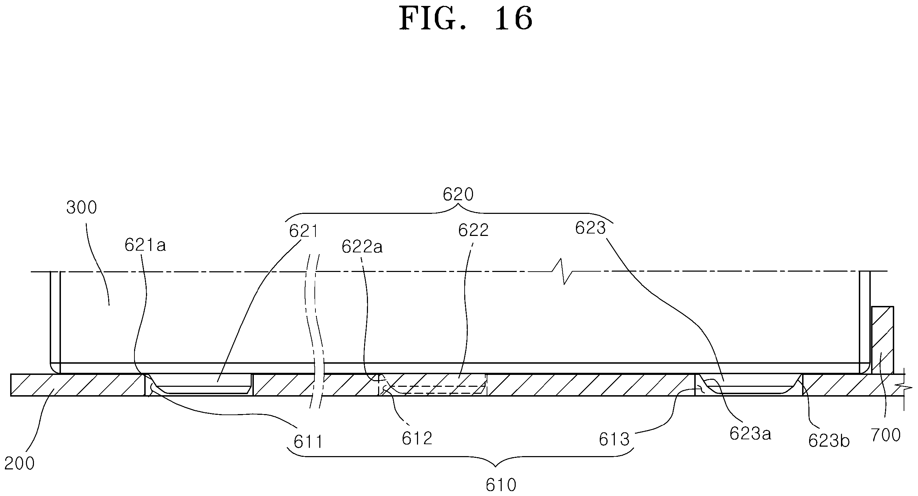

Referring to FIG. 15 and FIG. 16, as the battery module 300 is inserted into the rack frame 100 from the outside of the rack frame 100, the third alignment protrusions 623 are inserted into the first alignment holes 611.

Then, as the battery module 300 continues to move in the first direction A, the third alignment protrusions 623 are separated from the first alignment holes 611 along the fourth beveled surfaces 623b and move together with the battery module 300 in the first direction A while maintaining contact with the tray 200.

In this process, since the first alignment holes 611 and the second alignment holes 612 are disposed to alternate with each other in the intersecting direction with respect to the first direction A, the third alignment protrusions 623 may be continuously moved toward the third alignment holes 613 without being inserted into the second alignment holes 612.

Then, the third alignment protrusions 623 are inserted into the third alignment holes 613 while the second alignment protrusions 622 and the first alignment protrusions 621 are inserted into the first alignment holes 611 and the second alignment holes 612, respectively.

As the first beveled surface 621a and the second beveled surface 622a are disposed to face the second direction B, peripheral surfaces of the second alignment protrusions 622 and the first alignment protrusions 621 are engaged with edge surfaces of the first alignment holes 611 and the second alignment holes 612, respectively, and movement of the battery module 300 in the first direction A is stopped.

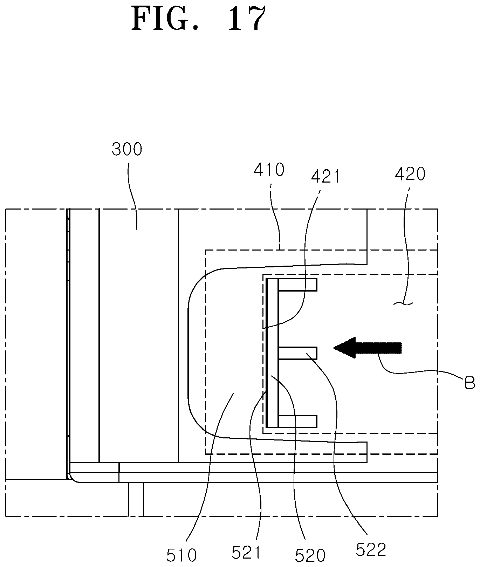

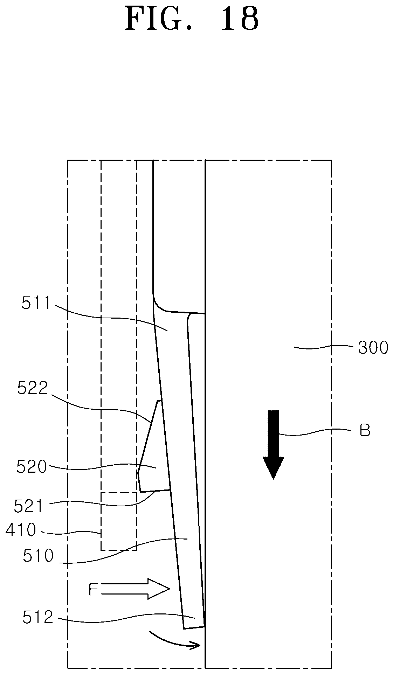

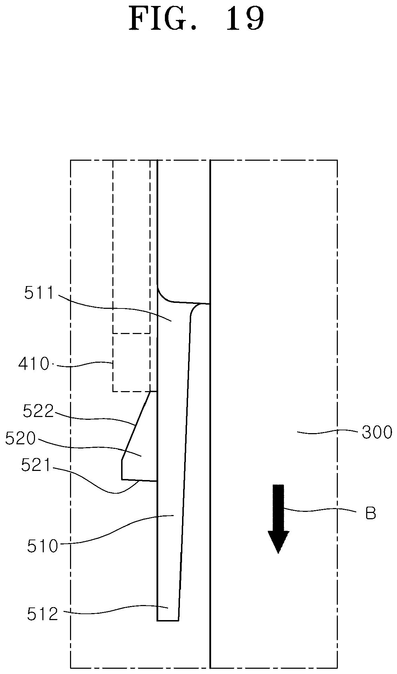

FIG. 17 to FIG. 20 are schematic views illustrating a process in which the battery module is removed from the rack frame in the energy storage device according to the embodiment of the present disclosure.

Referring to FIG. 16 to FIG. 19, as the battery module 300 is moved in the second direction B from the state shown in FIG. 16, the hook 520 inserted into the rail hole 420 is moved toward the first end 421.

When the battery module 300 is moved a preset distance or more in the second direction B, the latch facet 521 of the hook 520 contacts the first end 421 and movement of the battery module 300 in the second direction B is stopped. As a result, the battery module 300 may be kept protruding from the first surface 101 of the rack frame 100 by a preset distance.

Then, if an operator wants to continue movement of the battery module 300 in the second direction B, the operator presses the outer surface of the stopper body 510 toward the side surface of the battery module 300.

The movable end 512 of the stopper body 510 is moved toward the side surface of the battery module 300 by this compressive force and the hook 520 is disengaged from the rail hole 420.

Accordingly, the hook 520 does not collide with the rail body 410 and the battery module 300 may continue to be moved in the second direction B.

After the stopper body 510 is moved out of the rack frame 100, the stopper body 510 may be restored to an initial position thereof by elastic resilience thereof as the operator releases the compressive force applied to the stopper body 510.

The above operation may be repeated sequentially with respect to the plurality of stoppers 500 spaced apart from each other in the longitudinal direction of the battery module 300 until the battery module 300 is fully inserted into the rack frame 100.

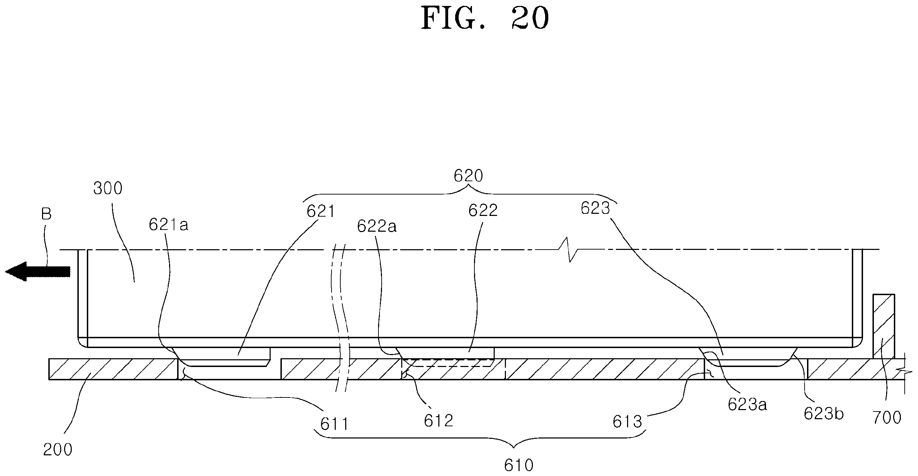

Referring to FIG. 16 and FIG. 20, as the battery module 300 is moved in the second direction B from the state of FIG. 16, the first alignment protrusions 621, the second alignment protrusions 622, and the third alignment protrusions 623 are separated from the first alignment holes 611, the second alignment holes 612, and the third alignment holes 613 along the first beveled surfaces 621a, the second beveled surfaces 622a, and the third beveled surfaces 623a.

Then, as the battery module 300 continues to move in the second direction B, the first alignment protrusions 621 and the second alignment protrusions 622 are sequentially separated from the tray 200, and the third alignment protrusions 623 are inserted into the first alignment holes 611. As a result, independently of the stopper 500, the third alignment protrusions 623 can ultimately prevent the battery module 300 from falling from the rack frame 100.

Then, the third alignment protrusions 623 are separated from the first alignment holes 611 along the third beveled surfaces 623a and the battery module 300 is completely separated from the rack frame 100.

Although the present disclosure has been described with reference to some example embodiments, it should be understood by those skilled in the art that these embodiments are given by way of illustration only, and that various modifications, variations and alterations can be made without departing from the scope of the invention.

Therefore, the scope of the invention should be limited only by the claims and equivalents thereto.

## Claims

1. An energy storage system comprising:
a rack frame;
a tray provided to the rack frame;
a battery module disposed on the tray and insertable into the rack frame while moving in a first direction;
a guide rail disposed to face the battery module and configured to guide movement of the battery module; and
a stopper disposed between the battery module and the guide rail and configured to selectively restrict movement of the battery module in a second direction opposite the first direction.

2. The energy storage system according to claim 1, wherein the stopper is composed of a plurality stoppers spaced apart from each other in the first direction.

3. The energy storage system according to claim 1 or claim 2, wherein the guide rail comprises:
a rail body disposed to face the battery module; and
a rail hole formed through the rail body and having a first end and a second end spaced apart from the first end in the first direction.

4. The energy storage system according to claim 3, wherein the rail hole has a smaller length than the battery module.

5. The energy storage system according to claim 3 or claim 4, wherein the stopper comprises:
a stopper body movably connected to the battery module; and
a hook secured to the stopper body and inserted into or disengaged from the rail hole in a movement direction of the stopper body.

6. The energy storage system according to claim 5, wherein the stopper body is elastically deformable.

7. The energy storage system according to claim 5 or claim 6, wherein the stopper body is reciprocally movably connected to the battery module in a direction intersecting the first direction.

8. The energy storage system according to claim 7, wherein the stopper body comprises:
a stationary end connected to the battery module; and
a movable end extending from the stationary end and spaced apart from the battery module, the movable end being rotatable about the stationary end.

9. The energy storage system according to claim 8, wherein the movable end extends from the stationary end in the second direction.

10. The energy storage system according to any one of claims 5 to 9, wherein the hook comprises:
a latch facet facing the first end; and
a guide facet extending from the latch facet in the first direction and disposed at an inclination with respect to the latch facet.

11. The energy storage system according to claim 10, wherein the latch facet is brought into contact with the first end as the battery module is moved in the second direction.

12. The energy storage system according to any one of claims 1 to 11, further comprising:
an alignment member disposed between the tray and the battery module and configured to align a position of the battery module.

13. The energy storage system according to claim 12, wherein the alignment member comprises:
an alignment hole formed through any one of the tray and the battery module; and
an alignment protrusion protruding from the other of the tray and the battery module and inserted into or separated from the alignment hole in conjunction with movement of the battery module.

14. The energy storage system according to claim 13, wherein:
the alignment hole comprises a first alignment hole, a second alignment hole and a third alignment hole sequentially arranged in the first direction; and
the alignment protrusion comprises a first alignment protrusion, a second alignment protrusion and a third alignment protrusion sequentially arranged in the first direction.

15. The energy storage system according to claim 14, wherein the second alignment hole is disposed to alternate with the first alignment hole in an intersecting direction with respect to the first direction and the third alignment hole is disposed to face the first alignment hole in a direction parallel to the first direction.
